# EUROPEAN PATENT APPLICATION

(11) **EP 4 484 775 A1**
(43) Date of publication of application: **01.01.2025**
(21) Application number: 23759682.0
(22) Date of filing: 07.02.2023
(51) Int. Cl.: F16C 11/06

(54) **BALL JOINT SEAL STRUCTURE AND FERRULE RING MOUNTING METHOD**

(30) Priority: 24.02.2022 JP 2022026306
(71) Applicant: NOK Corporation, Minato-ku Tokyo 105-8585 (JP)
(72) Inventor: SASAKI Naoya, Makinohara-shi, Shizuoka 421-0532 (JP); HOSEN Tatsuro, Makinohara-shi, Shizuoka 421-0532 (JP)
(74) Representative: Global IP Europe Patentanwaltskanzlei
(86) International application number: PCT/JP2023/004021
(87) International publication number: WO 2023/162678

(57) **Abstract**

The disclosure provides a ball joint seal structure that includes a ferrule ring interposed between a small-diameter opening portion of a dust cover and a knuckle. The ball joint connects the knuckle to a stud, and a ball head provided on the end of the stud is accommodated in a socket in a rockable and rotatable manner. The dust cover connects a large-diameter opening that surrounds the socket, which houses the ball head, and a small-diameter opening portion, which surrounds the stud, by a membrane. The ferrule ring includes an annular portion that suppresses the entry of dust through a cutout produced when, for example, a pinch bolt type knuckle is adopted, and has an inclined portion, which inclines toward the dust cover, on the outer circumferential edge thereof.

## Description

### Technical Field

The present disclosure relates to a ball joint seal structure and a ferrule ring mounting method.

### Background Art

Ball joints are frequently used in automobile suspension devices and steering systems. A ball joint has a structure in which a knuckle is fixed to one end of a stud, and a ball head provided on the other end of the stud is housed and held in a socket. The inside of the socket is filled with grease to allow the ball head of the stud to smoothly operate.

A dust cover mounted on the ball joint prevents grease from leaking out and blocks foreign matter from entering into the socket. Such a dust cover is a membrane-like member which has a small-diameter opening portion and a large-diameter opening portion, elastically covers the stud by a seal lip provided at the small-diameter opening portion, and surrounds and seals the ball head accommodating area by the large-diameter opening portion.

There are two types of structure for connecting the stud and the knuckle of a ball joint, namely, a tapered matching type and a pinch bolt type.

The tapered matching type has a structure in which the outer circumferential surface of the stud and the inner circumferential surface of a knuckle mounting hole, into which the stud is to be inserted, are matched in the axial direction by using the tapered surfaces thereof, and the stud and the knuckle are fixed in this state.

The pinch bolt type has a structure in which a cutout that cuts in the axial direction is provided in the knuckle, and the knuckle is fastened and fixed to the stud by narrowing the gap in the cutout by using fasteners such as a bolt and a nut (Refer to Patent Document 1).

In recent years, with the spread of EVs (Electric Vehicles), there has been a demand for space saving in an undercarriage. It is needless to say that the space saving is required not only in the undercarriage, but also in various areas of the automotive field, such as in an engine compartment. The demand for space saving is more easily met by the pinch bolt type ball joints than by the tapered matching type ball joints.

On the other hand, due to the structure in which the knuckle is provided with the cutout, the pinch bolt type ball joint is unprotected against dust entering into the cutout, and in many cases, the small-diameter opening portion of the dust cover is not provided with a dust lip. Consequently, the areas of the stud and knuckle of the ball joint are severely rusted, and the rust increases wear on the seal lip provided at the small-diameter opening portion of the dust lip, thus deteriorating the sealing function.

Therefore, as shown in, for example, WO/2017/018169 (hereinafter referred to as "Patent Document 1"), a metal annular member called a ferrule ring ("annular plate 6" in Patent Document 1) is interposed between the knuckle and the small-diameter opening portion of the dust cover to suppress entry of foreign matter through the cutout. This has an advantage of providing the ferrule ring, which makes it easy to create the structure for providing a dust lip at the small-diameter opening portion of the dust cover.

Regarding the ferrule ring, as described in, for example, Japanese Unexamined Patent Application Publication No. 2011-064208 (hereinafter referred to as "Patent Document 2"), one having a shape in which the outer circumferential edge thereof is bent toward a dust cover has been known ("ferrule 9" in Patent Document 2). Such a shape of the ferrule ring has been devised to prevent dust from entering into the dust cover (refer to paragraph "0010" of Patent Document 2) when a so-called opening phenomenon takes place, in which a gap occurs between the ferrule ring adjacent to the knuckle and the small-diameter opening portion of the dust cover (refer to FIG. 8 of Patent Document 2).

Japanese Unexamined Patent Application Publication No. 2016-125625 (hereinafter referred to as "Patent Document 3) describes "ferrule ring 150" having a shape in which not only the outer circumferential edge is bent toward a dust cover but the small-diameter opening portion of the dust cover is held in a wrapped manner. According to such a box-shaped ferrule ring, it is inferred that the small-diameter opening portion is held in a box shape, thus suppressing the occurrence of the opening phenomenon. Patent Document 3 describes "the attitude of the seal portion is stably maintained in a second annular member" (refer to paragraph "0010" of Patent Document 3).

### Prior Art Documents

### Patent Documents

Patent Document 1: International Publication No. WO/2017/018169
Patent Document 2: Japanese Unexamined Patent Application Publication No. 2011-064208
Patent Document 3: Japanese Unexamined Patent Application Publication No. 2016-125625

### Summary

### Problem to be Solved

In the ferrule ring having the shape in which the outer circumferential edge is bent as described in Patent Document 2, sliding occurs between the bent outer circumferential edge and the small-diameter opening portion of the dust cover when the stud rocks and rotates. The sliding that repeatedly occurs leads to wear of the small-diameter opening portion, and therefore, an improvement is desired.

The ferrule ring that wraps and holds the small-diameter opening portion of the dust cover as described in Patent Document 3 requires processing the ferrule ring to wrap the small-diameter opening portion, resulting in an increased number of manufacturing processes accordingly. If increasing the number of manufacturing processes is to be avoided, a structure cannot be adopted, in which the small-diameter opening portion is wrapped by the ferrule ring.

An object of the present disclosure is to suppress an increase in sliding torque between a ferrule ring adjacent to a knuckle and a small-diameter opening portion of a dust cover when a stud rocks or rotates.

### Means for Solving the Problem

An aspect of a ball joint seal structure is a ball joint seal structure having a ferrule ring interposed between a knuckle, which is connected to a stud of a ball joint, and a small-diameter opening portion of a dust cover that covers the stud, wherein an outer circumferential edge of the ferrule ring inclines toward the dust cover at an angle that is an obtuse angle with respect to an inner circumferential surface of the ferrule ring.

Another aspect of the ball joint seal structure includes a ball joint, a dust cover, and a ferrule ring. The ball joint connects a knuckle to a stud and rockably and rotatably accommodates a ball head, which is provided on an end of the stud, in a socket. The dust cover includes a large-diameter opening portion surrounding an accommodating area of the socket that houses the ball head, and a small-diameter opening portion surrounding the stud, and connects the large-diameter opening portion and the small-diameter opening portion by a membrane. The ferrule ring interposes between the knuckle and the small-diameter opening portion of the dust cover. The ferrule ring includes an annular portion in contact with one surface of the knuckle adjacent to the dust cover, and an inclined portion that is provided on an outer circumference of the annular portion and inclines toward the dust cover at an angle that is an obtuse angle with respect to the annular portion.

An aspect of a ferrule ring mounting method includes preparing a ferrule ring to be interposed between a knuckle, which is connected to a stud of a ball joint, and a small-diameter opening portion of a dust cover that covers the stud, bending an outer circumferential edge of the ferrule ring at an angle that is an obtuse angle with respect to an inner circumferential surface thereof, bending an inner circumferential edge of the ferrule ring at a right angle to form a cylindrical portion, and bringing the ferrule ring into contact with a small-diameter opening portion of a dust cover of a ball joint, with a bent portion of the outer circumferential edge facing inward, and then caulking the small-diameter opening portion by an end of the cylindrical portion provided on the inner circumferential edge of the ferrule ring.

### Effect

It is possible to suppress an increase in sliding torque between a ferrule ring adjacent to a knuckle and a small-diameter opening portion of a dust cover when a stud rocks or rotates.

### Brief Description of Drawings

FIG. 1 is a front view illustrating a seal structure of a ball joint, with a dust cover in a sectional view, according to a first embodiment.
FIG. 2 is a plan view of a knuckle.
FIG. 3 is a longitudinal sectional front view illustrating the knuckle, a ferrule ring, and a small-diameter opening portion of a dust lip.
FIG. 4(A) is a longitudinal sectional front view illustrating the ferrule ring before installation, and FIG. 4(B) is a longitudinal sectional front view illustrating the ferrule ring after installation.
FIG. 5 is a longitudinal sectional front view of the ferrule ring after installation illustrating the tilt angle of an inclined portion.
FIG. 6(A) to FIG. 6(D) are longitudinal sectional front views illustrating the process of mounting the ferrule ring of the present embodiment on the dust cover in sequential order, as an example of a method for mounting a ferrule ring on a dust cover.
FIG. 7(A) to FIG. 7(D) are longitudinal sectional front views illustrating the process of mounting a ferrule ring of Comparative Example 1 on a dust cover in sequential order, as an example of a method for mounting a ferrule ring on a dust cover.
FIG. 8(A) to FIG. 8(D) are longitudinal sectional front views illustrating the process of mounting a ferrule ring of Comparative Example 2 on a dust cover in sequential order, as an example of a method for mounting a ferrule ring on a dust cover.
FIG. 9(A) to FIG. 9(D) are longitudinal sectional front views illustrating the process of mounting a ferrule ring of Comparative Example 3 on a dust cover in sequential order, as an example of a method for mounting a ferrule ring on a dust cover.
FIG. 10 is a longitudinal sectional front view illustrating a small-diameter opening portion of a dust cover, as a second embodiment.
FIG. 11 is a front view illustrating a seal structure of a ball joint, with the dust cover in a sectional view.

### Description of Embodiments

An embodiment will be described with reference to the accompanying drawings. The present embodiment is an example of a ball joint 101 that connects a lower arm (not illustrated), which is a joint object, and a knuckle 201. The seal structure of the ball joint 101 of the present embodiment defines the structure that provides a seal between the knuckle 201, which will be discussed later, and a small-diameter opening portion 133 of a dust cover 131.

The embodiments will be described according to the following items.

### [First Embodiment]

1. Configuration
   (1) Ball Joint
   (2) Dust cover
   (3) Ferrule ring
2. Method for mounting the ferrule ring
   (1) Manufacturing the ferrule ring
   (2) Fixing the ferrule ring
   (3) Comparative examples
      (a) Comparative Example 1
      (b) Comparative Example 2
      (c) Comparative Example 3
3. Operation and effect
   (1) Basic operation and effect
   (2) Coping with opening phenomenon
   (3) Suppressing increase in sliding torque
   (4) Preventing increase in number of manufacturing processes

### [Second Embodiment]

### [Modified Examples]

### [First Embodiment]

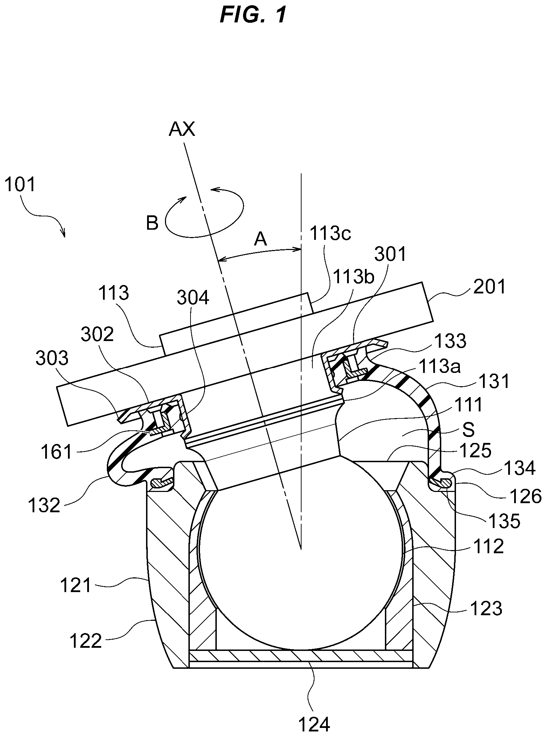

A first embodiment will be described with reference to FIG. 1 to FIG. 5.

### 1. Configuration

### (1) Ball joint

As illustrated in FIG. 1, a ball joint 101 has a basic structure in which a ball head 112 provided on a ball stud 111 is held in a socket 121 in a rockable and rotatable manner, and the holding area is sealed using a dust cover 131. In FIG. 1, the rocking direction of the ball joint 101 with respect to an axis AX is denoted by arrow A, and the rotation direction thereof with respect to the axis AX is denoted by arrow B.

The ball stud 111 is a metal member having a rod-shaped stud 113 extended from the ball head 112. The stud 113 extends from the ball head 112 such that the axis AX passes through the center point of the ball head 112. The ball joint 101 connects the stud 113 to the knuckle 201. The knuckle 201 is a metal member shaped like a thick, flat plate.

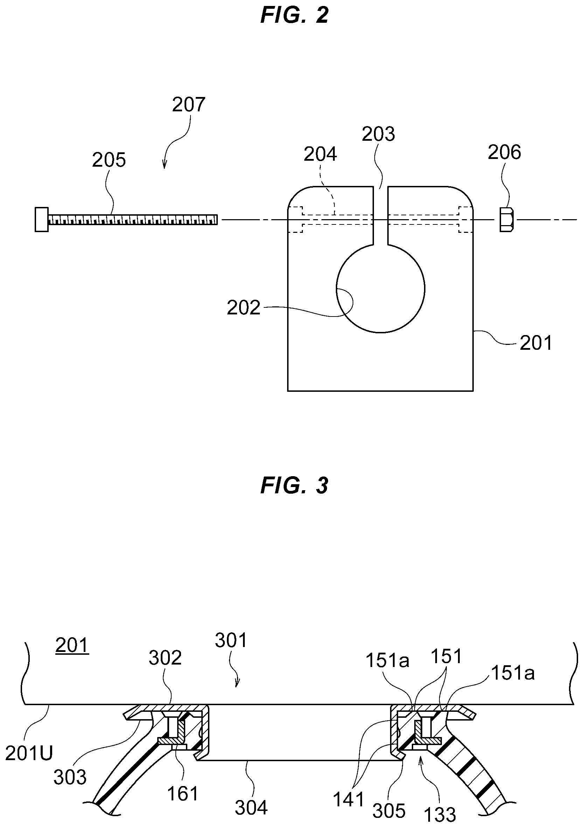

As illustrated in FIG. 2, the knuckle 201 has a mounting hole 202, through which the stud 113 is to be passed, and is provided with a cutout 203 that communicates the mounting hole 202 with the external space over the entire length in the axial direction (matching the direction of the axis AX of the ball joint 101). Bolt holes 204 are provided on both sides of the knuckle 201 with the cutout 203 in between, and a nut 206 is screwed onto the tip of a bolt 205 that passes through the bolt holes 204. The bolt 205 and the nut 206 constitute a fastener 207, and tightening the bolt 205 makes it possible to reduce the gap in the cutout 203, i.e., the inner diameter of the mounting hole 202. Thus, the stud 113 can be fixed to the knuckle 201 by tightening the bolt 205.

As illustrated in FIG. 1, the stud 113 has a large-diameter portion 113a, a seal portion 113b, and a mounting portion 113c in this order toward the tip thereof from the ball head 112.

The large-diameter portion 113a is a portion having the largest diameter in the stud 113.

The seal portion 113b is a portion to be in contact with seal lips 141, which are provided at the small-diameter opening portion 133 (to be described later) of the dust cover 131, so as to cause the seal lips 141 to implement a sealing function. The seal portion 113b has a uniform diameter over the entire length thereof.

The mounting portion 113c is a portion which is inserted into the mounting hole 202 of the knuckle 201 and fixed in the mounting hole 202 by tightening the fastener 207. The outer diameter of the mounting portion 113c is uniform over the entire length thereof. A step is provided between the mounting portion 113c and the seal portion 113b, and the mounting portion 113c is formed to have a smaller diameter than that of the seal portion 113b. When the mounting portion 113c is inserted into the mounting hole 202 of the knuckle 201, the knuckle 201 abuts against the step between the mounting portion 113c and the seal portion 113b and is positioned at this position.

The socket 121 houses a resin bearing 123 in a cylindrical housing 122 that is open at both ends, and has the bottom thereof covered with a bottom plate 124. One open end of the housing 122 is an opening portion 125, and the part of the stud 113 of the ball stud 111 is exposed to the outside from the opening portion 125. The bearing 123 is housed in the housing 122 with no gap and fixedly held to hold the ball head 112 of the ball stud 111 in a rockable and rotatable manner. The area where the bearing 123 and the ball head 112 are in contact is filled with lubricating grease (not illustrated).

The housing 122 has a mounting portion 126 formed on the outer circumferential surface thereof closer to the opening portion 125. The mounting portion 126 is a small-diameter opening portion having a stepped shape for mounting the dust cover 131.

### (2) Dust cover

The dust cover 131 is a membrane-like member formed of a rubber-like elastic member. The dust cover 131 is provided with the small-diameter opening portion 133 at one end of a cup-shaped membrane 132 and a large-diameter opening portion 134 at the other end. The dust cover 131, which is a rubber-like elastic member, has flexibility and elastic restoring force.

The large-diameter opening portion 134 has a clamper 135 attached by being fitted into the mounting portion 126 provided on the outer circumferential surface of the housing 122. The clamper 135 is a metal annular member embedded in the rubber large-diameter opening portion 134. Fitting the large-diameter opening portion 134 to the mounting portion 126 of the housing 122 causes the rubber elastic member to elastically deform, thereby fixedly attaching the large-diameter opening portion 134 to the housing 122.

As illustrated in FIG. 3, the small-diameter opening portion 133 is provided with the seal lips 141 and dust lips 151. These lips 141 and 151 are all formed on the dust cover 131 by integral molding to have an annular shape. The seal lips 141 are located on the inner circumferential portion of the small-diameter opening portion 133, and the dust lips 151 are located at an opening end of the small-diameter opening portion 133.

The seal lips 141 elastically cover the seal portion 113b of the stud 113 via a cylindrical portion 304 of a ferrule ring 301, which will be discussed later, and hermetically seal a space S which is defined by the membrane 132 of the dust cover 131 and which accommodates the ball head 112.

The dust lips 151 have two lip ends 151a that are annularly protruded and formed at the opening end of the small-diameter opening portion 133 facing the knuckle 201. The ferrule ring 301, which will be discussed later, is interposed between the knuckle 201 and the small-diameter opening portion 133. The lip ends 151a of the dust lips 151 elastically deform to come in contact with the undersurface of the knuckle 201 via the ferrule ring 301 so as to block entry of foreign matter from outside into the space S of the dust cover 131.

A reinforcing ring 161 is embedded in the small-diameter opening portion 133 of the dust cover 131. The reinforcing ring 161 is an annular metal member and is L-shaped in section. One piece of the L-shape extends in the axial direction of the dust cover 131, i.e., the direction along the axis AX of the ball stud 111, and the other piece of the L-shape extends in the direction orthogonal to the axis of the dust cover 131.

### (3) Ferrule ring

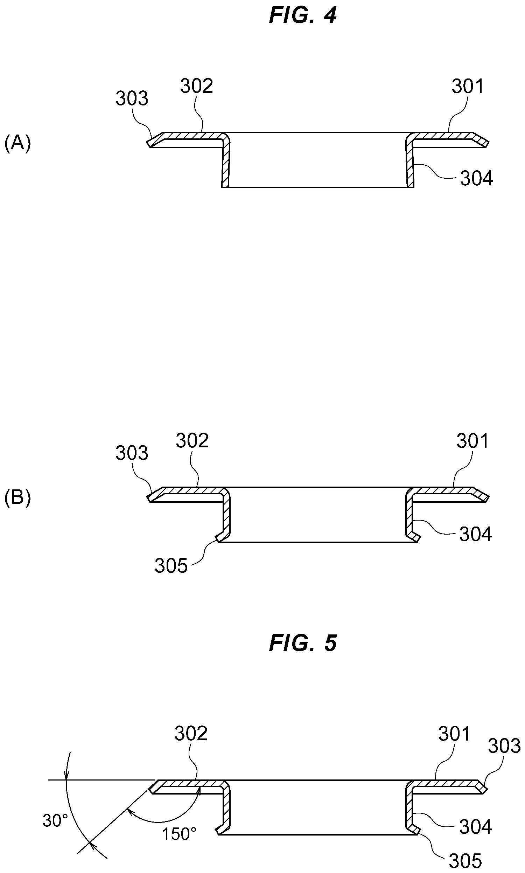

As illustrated in FIG. 3 and FIG. 4(A), the ferrule ring 301 is composed mainly of an annular portion 302 that is in surface contact with a undersurface 201U, which is one surface of the knuckle 201 adjacent to the dust cover 131, and has an inclined portion 303 on the outer circumferential edge and the cylindrical portion 304 on the inner circumferential edge. The ferrule ring 301 is an integrally molded product in which the annular portion 302, the inclined portion 303, and the cylindrical portion 304 are formed by press working.

The annular portion 302 is a flat annular body that is in contact with the undersurface 201U of the knuckle 201. The mutual contact between the annular portion 302 and the undersurface 201U of the knuckle 201 suppresses foreign matter from entering between the knuckle 201 and the ferrule ring 301 from outside.

As illustrated in FIG. 5, the inclined portion 303 provided on the outer circumferential edge of the ferrule ring 301 is inclined toward the dust cover 131 at an angle that is an obtuse angle with respect to the annular portion 302 forming the inner circumferential surface of the ferrule ring 301.

As an example, the inclined portion 303 is formed by bending the outer circumferential edge of the ferrule ring 301 by, for example, 30 degrees with respect to the virtual plane including the annular portion 302. Consequently, the inclined portion 303 is inclined toward the dust cover 131 at a 150-degree angle relative to the annular portion 302. In this case, the inclined portion 303 is set at a 30-degree angle with respect to the undersurface 201U of the knuckle 201 when the ferrule ring 301 is installed (refer to FIG. 3).

It is needless to say that the 150-degree tilt angle of the inclined portion 303 is merely an example. The inclined portion 303 may be inclined at a different angle. In this instance, if the inclined portion 303 is formed by bending the outer circumferential edge of the ferrule ring 301, the inclined portion 303 can be obtained by bending the outer circumferential edge of the ferrule ring 301 at an angle not exceeding 90 degrees.

As illustrated in FIG. 3, the dust lips 151 provided at the small-diameter opening portion 133 of the dust cover 131 have a smaller diameter than the inclined outer circumferential edge of the ferrule ring 301 (the inclined portion 303). More specifically, the outer diameters of the lip ends 151a on the outer circumferences of the dust lips 151 are smaller than the circumference forming the boundary between the annular portion 302 and the inclined portion 303. Consequently, the dust lips 151 are in contact with the ferrule ring 301 on the inner circumferential side relative to the inclined portion 303.

In this instance, the dust lips 151 may come in contact with the ferrule ring 301 on the inner circumferential side relative to the inclined portion 303 in the following two modes:

### (Mode 1)

The dust lips 151 come in contact with the ferrule ring 301 on the inner circumferential side relative to the inclined portion 303 when the stud 113 of the ball joint 101 is not inclined.

### (Mode 2)

The dust lips 151 come in contact with the ferrule ring 301 on the inner circumferential side relative to the inclined portion 303 also when the stud 113 of the ball joint 101 is inclined. In implementation, either of the two modes may be applied. However, the effect of reducing sliding torque, which will be discussed later, is higher in Mode 2.

As illustrated in FIG. 1, the seal portion 113b of the stud 113, which forms part of the ball stud 111, fits with the cylindrical portion 304. The inner diameter of the cylindrical portion 304 has the same dimension as the outer diameter of the seal portion 113b.

As illustrated in FIG. 4(A), the cylindrical portion 304 of the ferrule ring 301 before installation is formed into a straight pipe shape that fits the seal portion 113b of the stud 113. On the other hand, as illustrated in FIG. 1, FIG. 3, FIG. 4(B), and FIG. 5, the end of the cylindrical portion 304 after installation has an enlarged diameter. The enlarged-diameter portion is the caulked portion.

### 2. Method for mounting the ferrule ring

In the present embodiment, first, the ferrule ring 301 is manufactured as a single unit, and the manufactured ferrule ring 301 is attached to the small-diameter opening portion 133 of the dust cover 131. More specifically, the following steps are performed.

### (1) Manufacturing the ferrule ring

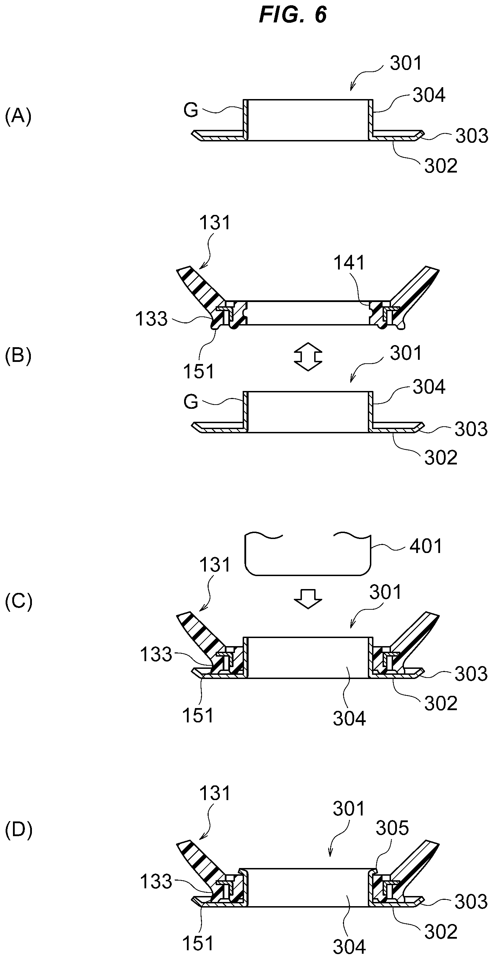

As illustrated in FIG. 6(A), the outer circumferential edge of the ferrule ring 301 is bent at, for example, 30 degrees to form the inclined portion 303. Before or after this, the inner circumferential edge of the ferrule ring 301 is bent at a right angle to form the cylindrical portion 304. Either the inclined portion 303 or the cylindrical portion 304 may be formed first, or both of these may be simultaneously formed.

### (2) Fixing the ferrule ring

As illustrated in FIG. 6(B), the dust cover 131 and the ferrule ring 301 are set to face each other such that the surface of the ferrule ring 301 adjacent to the cylindrical portion 304 faces the small-diameter opening portion 133 of the dust cover 131. In this instance, grease G is to be applied in advance to the outer circumferential surface of the cylindrical portion 304 of the ferrule ring 301.

In this state, the cylindrical portion 304 is fitted into the opening of the small-diameter opening portion 133 so as to attach the ferrule ring 301 to the dust cover 131. This causes the seal lips 141, which are provided at the small-diameter opening portion 133, to come in contact with the outer circumferential surface of the cylindrical portion 304, and the dust lips 151 abut against the annular portion 302 of the ferrule ring 301.

FIG. 6(C) illustrates a state in which the dust lips 151 provided at the small-diameter opening portion 133 have abutted against the annular portion 302 of the ferrule ring 301. In this state, a jig 401 of a caulking machine, which is not illustrated, is pressed against the opening of the cylindrical portion 304 to directly apply a pressing force. The jig 401 is a columnar or cylindrical-shaped pressing body having an outer diameter dimension slightly larger than the inner diameter of the cylindrical portion 304, and has the outer circumferential edge of the tip thereof formed in a curved shape so as to fit to the inner circumference of the cylindrical portion 304.

As illustrated in FIG. 6(D), when the jig 401 is pressed against the cylindrical portion 304 of the ferrule ring 301 to apply a pressing force thereto, the end of the cylindrical portion 304 is deformed by being pressed by the jig 401. As a result, the small-diameter opening portion 133 of the dust cover 131 is caulked by the cylindrical portion 304 of the ferrule ring 301 (refer to FIG. 3). In FIG. 6(D), the caulked portion is denoted by reference numeral 305.

As illustrated in FIG. 1, the caulked portion 305 of the cylindrical portion 304 is enlarged in diameter and coincides with the size and the shape of the large-diameter portion 113a provided on the stud 113. Consequently, the ferrule ring 301 fits with the large-diameter portion 113a and the seal portion 113b of the stud 113.

### (3) Comparative example

Three comparative examples are described below for comparison with the method for mounting the ferrule ring 301 of the present embodiment onto the dust cover 131.

### (a) Comparative Example 1

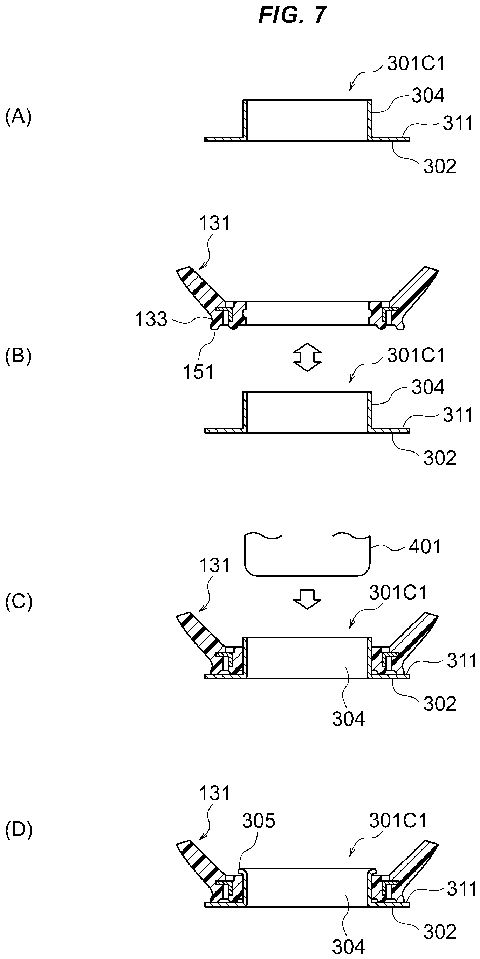

A ferrule ring 301C1 of Comparative Example 1 is an example not provided with the inclined portion 303. In an annular portion 302 of the ferrule ring 301C1, the inclined portion 303 of the present embodiment has been replaced by a straight portion 311 (refer to FIG. 7(D)). The straight portion 311 is positioned to be flush with the annular portion 302.

Regarding other aspects, the manufacture of the ferrule ring 301C1 (refer to FIG. 7(A)) and the fixing of the ferrule ring 301C1 to a dust cover 131 (FIGS. 7(B) to (D)) are similar to the manufacture and fixing of the ferrule ring 301 of the present embodiment (FIG. 6(A) and FIGS. 6(B) to (D) ).

When considered specifically in terms of the absence of the inclined portion 303, the ferrule ring 301C1 of Comparative Example 1 has similarities to the configuration example described in Patent Document 1.

### (b) Comparative Example 2

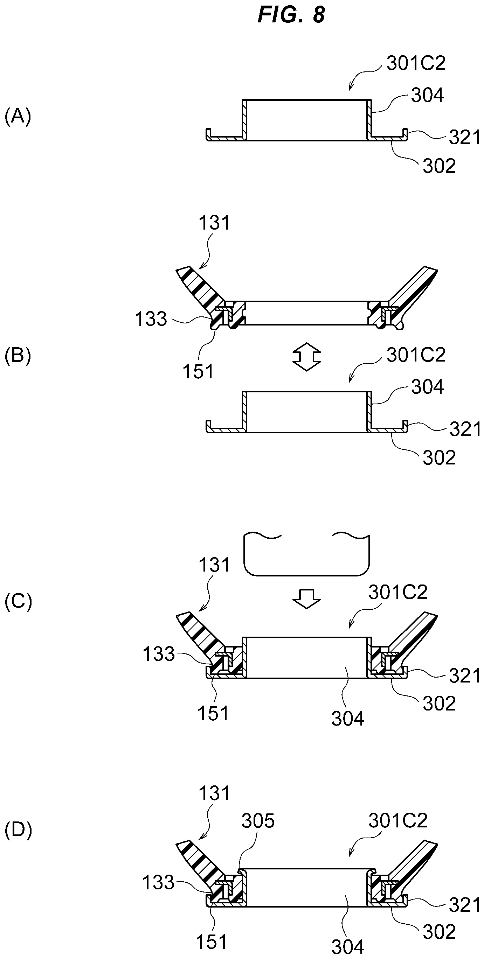

A ferrule ring 301C2 of Comparative Example 2 is an example in which the outer circumferential edge of the ferrule ring 301C2 is bent at a right angle to form a bent portion 321, which replaces the inclined portion 303 (refer to FIG. 8(D)). In the ferrule ring 301C2, the outer circumferential edge, which has the inclined portion 303 in the present embodiment, is provided with the bent portion 321, and a dust lip 151 of a dust cover 131 is in contact with the inner circumferential surface of the bent portion 321.

Regarding other aspects, the manufacture of the ferrule ring 301C2 (refer to FIG. 8(A)) and the fixing of the ferrule ring 301C2 to the dust cover 131 (FIGS. 8(B) to (D)) are similar to the manufacture and fixing of the ferrule ring 301 of the present embodiment (FIG. 6(A) and FIGS. 6(B) to (D) ).

The ferrule ring 301C2 of Comparative Example 2 has similarities to the configuration example described in Patent Document 2 when specifically considered that the outer circumferential edge of the annular portion 302 is bent and raised, and the dust lip 151 is in contact with the inner circumferential surface of the raised portion.

### (c) Comparative Example 3

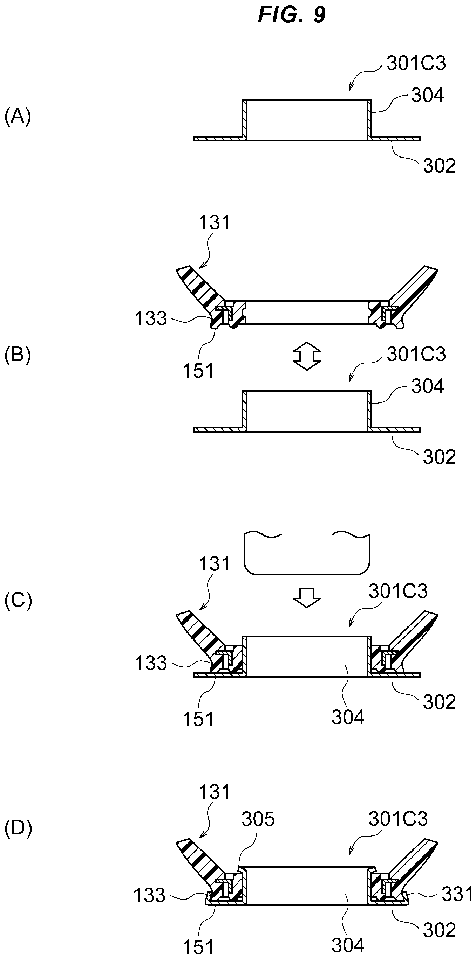

A ferrule ring 301C3 of Comparative Example 3 is an example in which the outer circumferential edge of the ferrule ring 301C3 is folded back to form a folded-back portion 331, which replaces the inclined portion 303 (refer to FIG. 9(D)). The folded-back portion 331 is formed by bending the outer circumferential edge of the ferrule ring 301C3 at an angle exceeding 90 degrees. In the ferrule ring 301C3, the folded-back portion 331 is provided at the outer circumferential edge, at which the inclined portion 303 is formed in the present embodiment, and a dust lip 151 of a dust cover 131 is pressed and held by the folded-back portion 331. As a result, a small-diameter opening portion 133 of the dust cover 131 is held by being wrapped by the ferrule ring 301C3.

The ferrule ring 301C3 of Comparative Example 3 is different from the ferrule ring 301 of the present embodiment, the ferrule ring 301C1 of Comparative Example 1, and the ferrule ring 301C2 of Comparative Example 2 in the method for mounting the ferrule ring onto the dust cover 131. The folded-back portion 331 is not created in the manufacturing stage of the ferrule ring 301C3 (refer to FIG. 9(A)), but is created after a cylindrical portion 304 of the ferrule ring 301C3 is fitted into the opening of a small-diameter opening portion 133 (refer to FIGS. 9(B) and (C)), before or after a caulking step using a jig 401.

Thus, as in ferrule ring 301C1 of Comparative Example 1, no processing is performed to bend the outer circumferential edge of the annular portion 302 in the manufacturing stage of the ferrule ring 301C3 (refer to FIG. 9(A)).

When considered specifically holding the small-diameter opening portion 133 of the dust cover 131 in a wrapping manner, the ferrule ring 301C3 of Comparative Example 3 is similar to the configuration example described in Patent Document 3, although the shape of the wrapping itself is different.

The three Comparative Examples 1 to 3 have been described above. These Comparative Examples 1 to 3 are illustrated to clarify how the ferrule ring 301 of the present embodiment differs in terms of operation and effect when the inclined portion 303 is changed to the straight portion 311 (Comparative Example 1), the bent portion 321 (Comparative Example 2), and the folded-back portion 331 (Comparative Example 3), and how the ferrule ring 301 differs in terms of method for installation to the dust cover 131. With respect to the outer circumferential edge of the ferrule ring 301 (ferrule rings 301C1 to 301C3), although it is recognized that the straight portion 311 is similar to the structure described in Patent Document 1, the bent portion 321 is similar to the structure described in Patent Document 2, and the folded-back portion 331 is similar to the structure described in Patent Document 3, the Comparative Examples 1 to 3 are not prior art. The Comparative Examples 1 to 3 are merely comparative examples to be compared with the ferrule ring 301 of the present embodiment.

### 3. Operation and effect

### (1) Basic operation and effect

In such a configuration, the seal lips 141 seal the seal portion 113b of the stud 113 via the cylindrical portion 304 of the ferrule ring 301. Thus, the seal lips 141 prevent the leakage of the lubrication grease in the space S, which is defined by the membrane 132 of the dust cover 131, i.e., inside the joint.

The knuckle 201 of the pinch bolt type adopted by the present embodiment allows the entry of external foreign matter into the cutout 203. In the present embodiment, the external foreign matter entering through the cutout 203 can be blocked by the ferrule ring 301, making it difficult for the stud 113 and the knuckle 201 to rust.

The ferrule ring 301 also provides the operation and effect for easily providing the dust lips 151 at the small-diameter opening portion 133 of the dust cover 131. The dust lips 151 are in contact with the undersurface 201U of the knuckle 201 via the annular portion 302 of the ferrule ring 301 to prevent external foreign matter such as water, dust, or the like from entering into the joint.

In an environment where the ball joint 101 is used, an angle change occurs between a joint object, namely, the lower arm (not illustrated), and the knuckle 201. In response to the angle change, the ball head 112 rocks (arrow A in FIG. 1) or rotates (arrow B) in the socket 121 so as to enable the ball stud 111 to rock or rotate. The angle change between the two joint objects is absorbed by such a motion of the ball head 112.

When the ball stud 111 rocks, the dust cover 131 deforms. The dust cover 131, which is a rubber elastic member, has flexibility and elastic restoring force, and therefore stretches the membrane 132 on the expanding side (on the right in FIG. 1) and flexes and contracts the membrane 132 on the contraction side (on the left in FIG. 1) in response to the rocking of the ball stud 111. The dust cover 131 absorbs the deformation caused by the rocking of the ball stud 111.

### (2) Coping with opening phenomenon

When the ball stud 111 rocks, the dust lips 151 provided at the small-diameter opening portion 133 on the expanding side (corresponding to the right in FIG. 1) sometimes move in a direction away from the undersurface 201U of the knuckle 201. This is a so-called opening phenomenon.

The outer circumferential edge of the ferrule ring 301C1 of Comparative Example 1 has the straight portion 311 that is continuous in the same plane as the annular portion 302 (refer to FIG. 7(D)). For this reason, when the opening phenomenon occurs, external foreign matter is inconveniently allowed to enter through the gap created between the knuckle 201 and the small-diameter opening portion 133.

This applies also to the ferrule ring described in Patent Document 1 ("annular plate 6" in the Document).

In the ferrule ring 301 of the present embodiment, when the opening phenomenon occurs, the inclined portion 303 covers the gap created between the knuckle 201 and the small-diameter opening portion 133. Thus, according to the present embodiment, even if the opening phenomenon occurs, the entry of external foreign matter through the gap created between the knuckle 201 and the small-diameter opening portion 133 can be suppressed by the inclined portion 303 so as to maintain the sealing function.

### (3) Suppressing increase in sliding torque

A ferrule ring 301C2 of Comparative Example 2 is provided with a bent portion 321 formed by bending the outer circumferential edge thereof at a right angle, and has a dust lip 151 of a small-diameter opening portion 133 being in contact with the inner circumferential surface of the bent portion 321 (refer to FIG. 8(D)). When the stud 113 rocks and rotates, sliding occurs between the bent outer circumferential edge and the small-diameter opening portion 133 of a dust cover 131. The sliding that repeatedly occurs inconveniently leads to wear on the small-diameter opening portion 133.

This applies also to the ferrule ring described in Patent Document 2 ("ferrule 9" in the Document).

In the present embodiment, the outer circumferential edge of the ferrule ring 301 is not bent at a right angle, but is formed into an inclined portion 303 that inclines toward the dust cover 131 at an angle that is an obtuse angle relative to the annular portion 302 on the inner circumferential side, thereby reducing the torque of sliding against the dust lip 151 provided at the small-diameter opening portion 133. In addition, the lip ends 151a on the outer circumferential side of the dust lips 151 are formed to have a smaller diameter than that of the inclined portion 303 such that the dust lips 151 come in contact with the ferrule ring 301 on the inner circumferential side relative to the inclined portion 303, thus making it possible to prevent the occurrence of sliding torque between the dust lips 151 and the inclined portion 303 (in the case of the above-described Mode 2) or to reduce the sliding torque even if the sliding torque occurs (in the case of the above-described Mode 1). Consequently, the wear of the small-diameter opening portion 133 can be suppressed with resultant higher durability.

### (4) Preventing increase in number of manufacturing processes

In the ferrule ring 301C3 of Comparative Example 3, the small-diameter opening portion 133 of the dust cover 131 is pressed and held by the folded-back portion 331 to retain the small-diameter opening portion 133 in a wrapping manner. This makes it possible to suppress the opening phenomenon of the small-diameter opening portion 133. On the other hand, in the ferrule ring 301C3, the folded-back portion 331 cannot be formed in advance. The folded-back portion 331 needs to be formed after the cylindrical portion 304 of the ferrule ring 301C3 is fitted into the opening of the small-diameter opening portion 133, and before or after the formation of the caulked portion 305 by the jig 401. For this reason, when manufacturing the ferrule ring 301C3, the folded-back portion 331 cannot be pressed at the same time, leading to an inevitable increase in the number of manufacturing processes.

This applies also to the ferrule ring described in Patent Document 3 ("ferrule ring 150" in the Document).

The number of manufacturing processes is discussed on the basis of that of the ferrule ring 301C1 of Comparative Example 1 not provided with the inclined portion 303 (the present embodiment), the bent portion 321 (Comparative Example 2), and the folded-back portion 331 (Comparative Example 3), which are included in the structure for suppressing the entry of external foreign matter caused by the opening phenomenon.

The ferrule ring 301C1 of Comparative Example 1 has been described as having the outer circumferential edge thereof formed into the straight portion 311. The straight portion 311 is not formed by special processing, but is merely the outer circumferential edge of the annular portion 302. The annular portion 302 is formed in the flat-plate shape, so that the outer circumferential edge thereof naturally becomes the straight portion 311.

On the other hand, the inclined portion 303 provided on the ferrule ring 301 of the present embodiment can be formed by a single press working process by integrally molding the ferrule ring 301 together with the cylindrical portion 304 by press working. Thus, the number of manufacturing processes is the same as in Comparative Example 1 despite the presence of the additional element, namely, the inclined portion 303, which is not provided in Comparative Example 1.

Furthermore, even in the case where the inclined portion 303 is formed using a separate member from the annular portion 302, the ferrule ring 301 can be completed before installation to the dust cover 131. Unlike the folded-back portion 331 of Comparative Example 3, no further processing is required after the installation to the dust cover 131. This avoids the complexity of processing the ferrule ring 301 after the installation to the dust cover 131, thus resulting in higher work efficiency.

### [Second Embodiment]

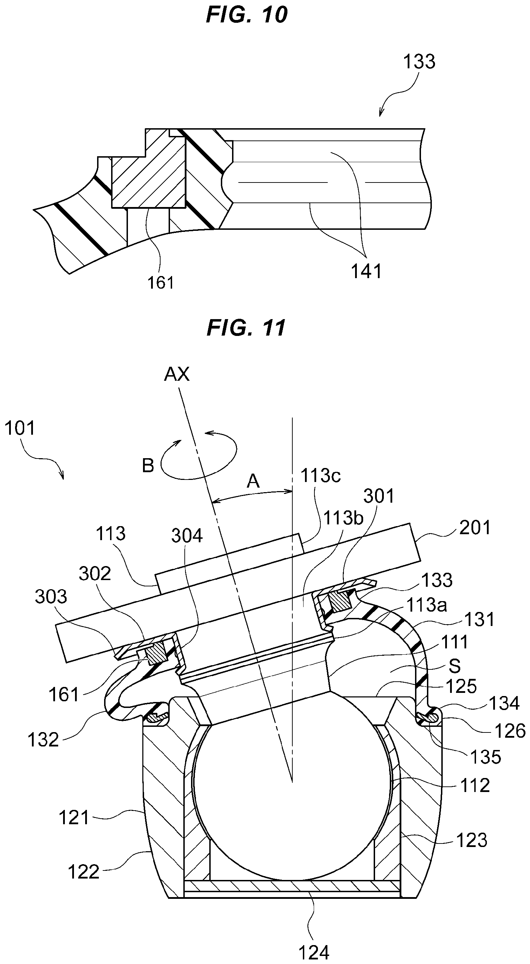

A second embodiment will be described with reference to FIG. 10 and FIG. 11. The same components as those in the first embodiment will be assigned the same reference numerals and the descriptions thereof will be omitted.

As illustrated in FIG. 10, the present embodiment is an example in which the dust lips 151 are not provided at a small-diameter opening portion 133 of a dust cover 131, thus exposing a reinforcing ring 161 made of metal. A rubber elastic material constituting the small-diameter opening portion 133 is provided so as to cover each of the inner circumference and the outer circumference of the reinforcing ring 161.

As illustrated in FIG. 11, an inclined portion 303 of a ferrule ring 301 is provided at a position in such a manner as to cover the small-diameter opening portion 133 of the dust cover 131 from the outer circumference and not to interfere with the small-diameter opening portion 133.

### [Modified Examples]

Various modifications and changes are possible in implementation.

For example, when forming the inclined portion 303 by bending the ferrule ring 301, the angle at which the inclined portion 303 is bent does not necessarily have to be 30 degrees, and may be any other angles as long as the angle is, for example, 50 degrees or more and below 90 degrees. This makes it possible to obtain the inclined portion 303 that inclines obtusely toward the dust cover 131 at an angle of 175 degrees or less with respect to the inner circumferential surface of the ferrule ring 301. The angle at which the inclined portion 303 is bent is desirably 5 degrees or more, i.e., the angle formed relative to the inner circumferential surface of the ferrule ring 301 is desirably 175 degrees or less, in order to suppress the entry of foreign matter from outside if the so-called opening phenomenon, i.e., the phenomenon in which the small-diameter opening portion 133 of the dust lips 151 separates from the annular portion 302 of the ferrule ring 301, takes place when the stud 113 of the ball joint 101 rocks.

However, the inclined portion 303 does not necessarily have to be formed by bending the outer circumferential edge of the ferrule ring 301. A separate member constituting the inclined portion 303 may be joined to the outer circumferential edge of the ferrule ring 301. In this instance also, the inclined portion 303 desirably obtusely inclines at an angle of 175 degrees or less relative to the inner circumferential surface of the ferrule ring 301.

The above-described embodiments have shown the configuration examples in which the clamper 135 is embedded in the large-diameter opening portion 134. Alternatively, however, the clamper 135 may be configured to tighten the large-diameter opening portion 134 from the outer circumference thereof. Further alternatively, the clamper 135 may not necessarily be provided.

The above-described embodiment has shown the example in which the dust lip 151 has two lip ends 151a. However, the number of the lip ends 151a provided on the dust lip 151 does not have to be two, and may alternatively be, for example, one, or three or more.

The above-described embodiment has shown the example in which the L-shaped, metal reinforcing ring 161 is embedded in the small-diameter opening portion 133. Alternatively, however, the reinforcing ring 161 may be made of a material other than metal, such as resin, and may have a shape other than the L-shape, such as a rectangular shape in cross-section. The reinforcing ring 161 is not necessarily an essential element, and the small-diameter opening portion 133 may be configured without embedding the reinforcing ring 161.

Any other modifications and changes are allowed in implementation.

### Description of Reference Numerals

- 101: ball joint
- 111: ball stud
- 112: ball head
- 113: stud
- 113a: large-diameter portion
- 113b: seal portion
- 113c: mounting portion
- 121: socket
- 122: housing
- 123: bearing
- 124: bottom plate
- 125: opening portion
- 126: mounting portion
- 131: dust cover
- 132: membrane
- 133: small-diameter opening portion
- 134: large-diameter opening portion
- 135: clamper
- 141: seal lip
- 151: dust lip
- 151a: lip end
- 161: reinforcing ring
- 201: knuckle
- 201U: undersurface
- 202: mounting hole
- 203: cutout
- 204: bolt hole
- 205: bolt
- 206: nut
- 207: fastener
- 301: ferrule ring
- 302: annular portion
- 303: inclined portion
- 304: cylindrical portion
- 305: caulked portion
- 311: straight portion
- 321: bent portion
- 331: folded-back portion
- A: rocking direction
- B: rotation direction
- AX: axis
- S: space

## Claims

1. A ball joint seal structure comprising: a ferrule ring interposed between a knuckle, which is connected to a stud of a ball joint, and a small-diameter opening portion of a dust cover that covers the stud,
wherein an outer circumferential edge of the ferrule ring is inclined toward the dust cover at an angle that is an obtuse angle relative to an inner circumferential surface of the ferrule ring.

2. A ball joint seal structure comprising:
a ball joint that connects a knuckle to a stud and rockably and rotatably accommodates a ball head, which is provided on an end of the stud, in a socket;
a dust cover that includes a large-diameter opening portion surrounding an accommodating area of the socket that houses the ball head, and a small-diameter opening portion surrounding the stud, and connects the large-diameter opening portion and the small-diameter opening portion by a membrane; and
a ferrule ring interposed between the knuckle and the small-diameter opening portion of the dust cover,
wherein the ferrule ring includes:
an annular portion in contact with one surface of the knuckle, the one surface being adjacent to the dust cover, and
an inclined portion that is provided on an outer circumference of the annular portion, and inclines toward the dust cover at an angle that is an obtuse angle with respect to the annular portion.

3. The ball joint seal structure according to claim 1 or 2,
wherein the knuckle includes:
a mounting hole through which the stud passes;
a cutout that communicates the mounting hole with an external space over an entire length in an axial direction; and
a fastener that narrows a gap in the cutout thereby to fix the stud passing through the mounting hole.

4. The ball joint seal structure according to claim 1 or 2,
wherein the small-diameter opening portion of the dust cover includes a dust lip having a diameter that is smaller than an inclined outer circumferential edge of the ferrule ring.

5. The ball joint seal structure according to claim 1 or 2,
wherein the small-diameter opening portion of the dust cover includes a dust lip in contact with the ferrule ring on an inner circumferential side relative to an inclined outer circumferential edge of the ferrule ring.

6. The ball joint seal structure according to claim 1 or 2,
wherein the inclined outer circumferential edge of the ferrule ring is inclined at an angle of 5 degrees or more and below 90 degrees.

7. The ball joint seal structure according to claim 1 or 2,
wherein the ferrule ring includes a cylindrical portion that fits with the stud, and
the small-diameter opening portion of the dust cover includes a seal lip in contact with an outer circumferential surface of the cylindrical portion.

8. The ball joint seal structure according to claim 1 or 2,
wherein the ferrule ring is an integrally molded product.

9. The ball joint seal structure according to claim 1 or 2,
wherein an end of the cylindrical portion caulks the small-diameter opening portion of the dust cover.

10. A ferrule ring mounting method comprising:
preparing a ferrule ring to be interposed between a knuckle, which is connected to a stud of a ball joint, and a small-diameter opening portion of a dust cover that covers the stud;
bending an outer circumferential edge of the ferrule ring at an angle that is an obtuse angle with respect to an inner circumferential surface thereof;
bending an inner circumferential edge of the ferrule ring at a right angle to form a cylindrical portion; and
bringing the ferrule ring into contact with a small-diameter opening portion of a dust cover of a ball joint, with a bent portion of an outer circumferential edge facing inward, and then caulking the small-diameter opening portion by an end of the cylindrical portion provided on the inner circumferential edge of the ferrule ring.
